# EUROPEAN PATENT APPLICATION

(11) **EP 4 141 704 A1**
(43) Date of publication of application: **01.03.2023**
(21) Application number: 22171890.1
(22) Date of filing: 05.05.2022
(51) Int. Cl.: G06F 16/68

(54) **METHOD AND APPARATUS FOR MUSIC GENERATION, ELECTRONIC DEVICE, STORAGE MEDIUM**

(30) Priority: 31.08.2021 CN 202111012001
(71) Applicant: Beijing Dajia Internet Information Technology Co., Ltd., Beijing 100085 (CN)
(72) Inventor: Wang, Gu, Beijing, 100085 (CN); Wang, Zhenyu, Beijing, 100085 (CN); Wu, Xiangyu, Beijing, 100085 (CN)
(74) Representative: Angerhausen, Christoph

(57) **Abstract**

A method and an apparatus for music generation, an electronic device and a storage medium are provided. The method includes: determining (S201) first tag information of a first object by recognizing the first object; determining (S203) target background music based on the first tag information, in which the target background music includes lyrics template information which includes information about a number of words per sentence in lyrics suitable for the target background music; determining (S205) second tag information by extracting a tag of a second object; and displaying (S207) first lyrics on a music display page according to the second tag information and the lyrics template information, and playing the target background music.

## Description

### FIELD

The present disclosure relates to a field of Internet technologies, and more particularly to a method and an apparatus for music generation, an electronic device and a storage medium.

### BACKGROUND

With development of network technologies, video applications are very popular in people's daily life. Video interactive software provides users with diversified operation experience. Users may shoot videos of different styles anytime, anywhere, add various special effects and set different types of background music.

At present, scores and lyrics of music are generally creating manually by a composer, and the music is generated based on singing by some singers according to the scores and lyrics, and recording during the singing process.

However, since the scores of the music are manually created by the composer, and the music is generated based on singing by some singers according to the scores and lyrics, resulting in many people to participate and complex operations. In addition, in the related art, it is required manual selections for the lyrics, and the music selected by the users may not match a current picture. Switching the selections for many times by the users may be required in order to achieve desired effects, thus reducing efficiency of lyrics generation, resulting in poor matching between the picture of user work and the music, and reducing attention rate of the work.

### SUMMARY

The present disclosure provides a method and an apparatus for music generation, an electronic device and a storage medium. The technical solution of the present disclosure is as follows:

According to a first aspect of the present disclosure, a method for music generation is provided. The method includes:
determining first tag information of a first object by recognizing the first object;
determining target background music based on the first tag information, in which the target background music includes lyrics template information which includes information about a number of words per sentence in lyrics suitable for the target background music;
determining second tag information by extracting a tag of a second object; and
displaying first lyrics on a music display page according to the second tag information and the lyrics template information, and playing the target background music, in which a form of the target background music includes rap.

Optionally, the first tag information includes emotion tag information, determining the target background music based on the first tag information includes:
determining a first background music library according to the emotion tag information;
determining at least one piece of candidate background music from the first background music library according to the emotion tag information;
displaying identification information of the at least one piece of candidate background music on the music display page, in which the music display page includes a music selection control; and
determining the target background music from the at least one piece of candidate background music in response to a music selection instruction triggered based on the music selection control.

Optionally, the first tag information includes scene tag information, determining the target background music based on the first tag information includes:
determining a second background music library according to the scene tag information;
determining at least one piece of candidate background music from the second background music library according to the scene tag information;
displaying identification information of the at least one piece of candidate background music on the music display page, in which the music display page includes a music selection control; and
determining the target background music from the at least one piece of candidate background music in response to a music selection instruction triggered based on the music selection control.

Optionally, the method further includes:
obtaining the lyrics template information of the target background music by analyzing typesetting template of the target background music;
or
obtaining the lyrics template information of the target background music from an information storage area according to identification information of the target background music.

Optionally, the method further includes:
sending a template acquisition request to a server, in which the template acquisition request includes the identification information of the target background music; and
receiving the lyrics template information of the target background music sent by the server, in which the lyrics template information of the target background music is obtained by analyzing the typesetting template of the target background music by the server, or the lyrics template information of the target background music is stored in the information storage area of the server.

Optionally, displaying first lyrics on a music display page according to the second tag information and the lyrics template information includes:
determining candidate lyrics from a lyrics library according to the second tag information;
obtaining adjusted lyrics by integrating the candidate lyrics according to the lyrics template information;
obtaining the first lyrics by modifying the adjusted lyrics based on syntactic parsing and semantic analysis; and
displaying the first lyrics on the music display page.

Optionally, the method further includes:
determining that the first tag information of the first object is a preset tag by recognizing the first object, in which the preset tag is configured to represent failure to recognize the first object; and
determining the target background music from a third background music library.

Optionally, the music display page includes a camera control, and the method further includes:
obtaining capturing contents in response to a capturing instruction triggered based on the camera control;
in which displaying first lyrics on a music display page according to the second tag information and the lyrics template information, and playing the target background music includes:
displaying first lyrics on a music display page according to the second tag information and the lyrics template information, and playing the target background music and the capturing contents.

According to a second aspect of the present disclosure, an apparatus for music generation is provided. The apparatus includes:
a first recognizing module, configured to determine first tag information of a first object by recognizing the first object;
a first determining module, configured to determine target background music based on the first tag information, in which the target background music includes lyrics template information which includes information about a number of words per sentence in lyrics suitable for the target background music;
a tag extracting module, configured to determine second tag information by extracting a tag of a second object; and
a displaying module, configured to display first lyrics on a music display page according to the second tag information and the lyrics template information, and play the target background music, in which a form of the target background music includes rap.

Optionally, the first tag information includes emotion tag information, the first determining module includes:
a first determining sub-module, configured to determine a first background music library according to the emotion tag information;
a second determining sub-module, configured to determine at least one piece of candidate background music from the first background music library according to the emotion tag information;
a first displaying sub-module, configured to display identification information of the at least one piece of candidate background music on the music display page, in which the music display page includes a music selection control; and
a third determining sub-module, configured to determine the target background music from the at least one piece of candidate background music in response to a music selection instruction triggered based on the music selection control.

Optionally, the first tag information includes scene tag information, the first determining module includes:
a first determining sub-module, configured to determine a second background music library according to the scene tag information;
a second determining sub-module, configured to determine at least one piece of candidate background music from the second background music library according to the scene tag information; m
a first displaying sub-module, configured to display identification information of the at least one piece of candidate background music on the music display page, in which the music display page includes a music selection control; and
a third determining sub-module, configured to determine the target background music from the at least one piece of candidate background music in response to a music selection instruction triggered based on the music selection control.

Optionally, the apparatus further includes:
a template analyzing module, configured to obtain the lyrics template information of the target background music by analyzing typesetting template of the target background music;
or
a lyrics template information obtaining module, configured to obtain the lyrics template information of the target background music from an information storage area according to identification information of the target background music.

Optionally, the apparatus further includes:
a sending module, configured to send a template acquisition request to a server, in which the template acquisition request includes the identification information of the target background music; and
a receiving module, configured to receive the lyrics template information of the target background music sent by the server, in which the lyrics template information of the target background music is obtained by analyzing the typesetting template of the target background music by the server, or the lyrics template information of the target background music is stored in the information storage area of the server.

Optionally, the displaying module includes:
a lyrics determining module, configured to determine candidate lyrics from a lyrics library according to the second tag information;
a lyrics adjusting module, configured to obtain adjusted lyrics by integrating the candidate lyrics according to the lyrics template information;
a lyrics modifying module, configured to obtain the first lyrics by modifying the adjusted lyrics based on syntactic parsing and semantic analysis; and
a lyrics displaying module, configured to display the first lyrics on the music display page.

Optionally, the tag extracting module is configured to:
determine that the first tag information of the first object is a preset tag by recognizing the first object, in which the preset tag is configured to represent failure to recognize the first object; and
determine the target background music from a third background music library.

Optionally, the music display page includes a camera control, and the apparatus further includes:
a capturing module, configured to obtain capturing contents in response to a capturing instruction triggered based on the camera control;
in which the displaying module is configured to display first lyrics on a music display page according to the second tag information and the lyrics template information, and play the target background music and the capturing contents.

According to a third aspect of the present disclosure, an electronic device is provided. The electronic device includes: a processor; and a memory, configured to store instructions executable by the processor. The processor is configured to implement the method for music generation according to any one of embodiments of the first aspect in response to executing the instructions.

According to a fourth aspect of the present disclosure, a computer readable storage medium is provided. The storage medium is configured to store instructions, when executable by a processor of an electronic device, causing the electronic device to implement the method for music generation according to any one of embodiments of the first aspect.

According to a fifth aspect of the present disclosure, a computer program product is provided. The computer program product includes a computer program, stored in a readable storage medium, when read and executed from the storage medium by at least one processor of a computer device, causing the computer device to implement the method for music generation according to any one of embodiments of the first aspect.

The technical solution provided by the disclosure may include at least following beneficial effects.

The first tag information of the first object is determined by recognizing the first object. The target background music is determined based on the first tag information. The target background music includes the lyrics template information. The second tag information is determined by extracting the tag of the second object. The first lyrics are displayed on the music display page according to the second tag information and the lyrics template information, and the target background music is played. The form of the target background music includes rap. Therefore, embodiments of the present disclosure may automatically match the music related to objects in a current picture without manual selection. With extracting the tag of the second object, the appropriate lyrics may be determined on the basis of automatic matching and considering requirements of users, which may improve efficiency of lyrics generation. In this way, a matching degree between a picture of user works and the music may be improved as a whole, and an attention rate of the works may be improved.

It should be understood that above general description and following detailed description are only exemplary and explanatory, but do not limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram illustrating an application environment according to an embodiment of the present disclosure.
FIG. 2 is a flowchart illustrating a method for music generation according to an embodiment of the present disclosure.
FIG. 3 is a schematic diagram 1 illustrating a music display page according to an embodiment of the present disclosure.
FIG. 4 is a flowchart illustrating a method for determining target background music according to an embodiment of the present disclosure.
FIG. 5 is a schematic diagram 2 illustrating a music display page according to an embodiment of the present disclosure.
FIG. 6 is a flowchart illustrating a method for determining target background music according to an embodiment of the present disclosure.
FIG. 7 is a schematic diagram 3 illustrating a music display page according to an embodiment of the present disclosure.
FIG. 8 is a flowchart illustrating a method for determining first lyrics according to an embodiment of the present disclosure.
FIG. 9 is a block diagram illustrating an apparatus for music generation according to an embodiment of the present disclosure.
FIG. 10 is a block diagram illustrating an electronic device for music generation according to an embodiment of the present disclosure.

### DETAILED DESCRIPTION

In order to enable those skilled in the art to understand technical solutions of the present disclosure, reference will be made clearly and completely to the technical solutions in embodiments of the present disclosure with accompanying drawings.

It should be noted that terms "first" and "second" in the specification and claims of the present disclosure and the accompanying drawings are used to distinguish similar objects, rather than to describe a specific order or sequence. It should be understood that data used in such a manner may be interchanged under appropriate circumstances so that embodiments of the present disclosure described herein may be implemented in a sequence other than the sequence illustrated or described herein. The implementations described in the following embodiments do not represent all implementations consistent with the present disclosure; instead, the implementations described in the following exemplary embodiments are merely examples of an apparatus and method consistent with the attached claims and some aspects of the present disclosure.

All data related to users in present disclosure are data authorized by the users.

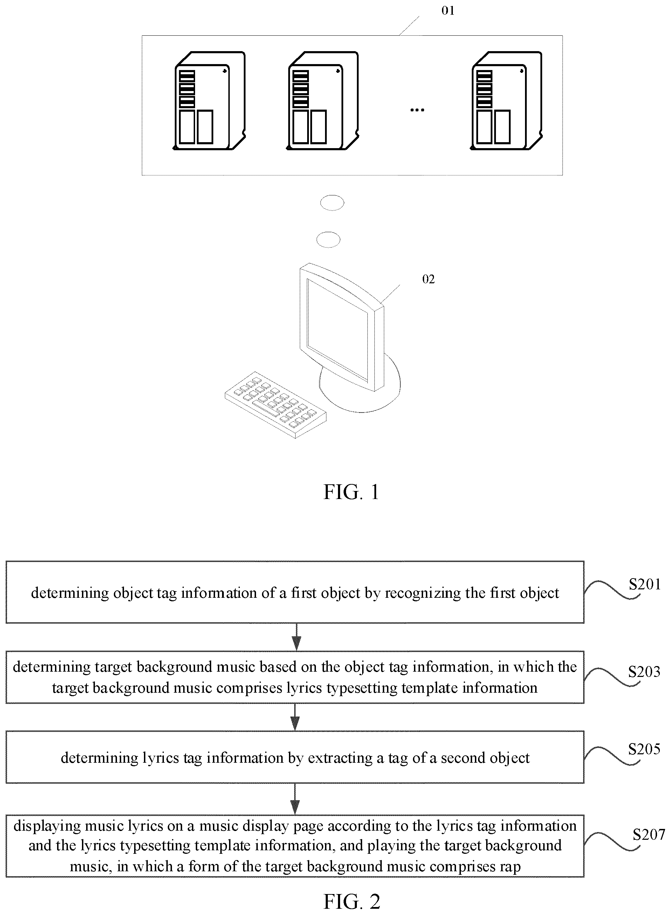

FIG. 1 is a schematic diagram illustrating an application environment according to an embodiment of the present disclosure. As illustrated in FIG. 1, the application environment may include a sever 01 and client 02. The server 01 may communicate with the client 02 through a wireless link or a wired link, which is not limited in the present disclosure.

For example, the server 01 may provide different background music or candidate lyrics to the client 02. For example, the server 01 may be, but not limited to, one or more of an independent server, or a server cluster or a distributed system including a plurality of physical servers, or a cloud server for providing cloud services, cloud databases, cloud computing, cloud functions, cloud storage, network services, cloud communications, middle ware services, domain name services, security services, CDN (Content Delivery Network) and basic cloud computing services such as big data and artificial intelligence platforms. An operating system running on the server 01 may include, but not limited to, an IOS system, a Linux system, a windows system, an UNIX system, an Android system, etc.

The client 02 may determine first tag information of a first object by recognizing the first object, determine target background music based on the first tag information, the target background music includes lyrics template information, determine second tag information by extracting a tag of a second object, and display first lyrics on a music display page according to the second tag information and the lyrics template information, and play the target background music. A form of the target background music includes rap. The client 02 may be, but not limited to, an electronic device, such as a smart phone, a desktop computer, a tablet computer, a notebook computer, a smart speaker, a digital assistant, an augmented reality (AR) device, a virtual reality (VR) device, a smart wearable device, etc. An operating system running on the client 02 may include, but not limited to, an Android system, an IOS system, a Linux system, a windows system, etc.

In addition, it should be noted that the application environment illustrated in FIG. 1 is an example of the application environment of a method for video processing according to the present disclosure. In practical application, the present disclosure may also include other application environments.

FIG. 2 is a flowchart illustrating a method for music generation according to an embodiment of the present disclosure. The method may be implemented by a client or other node devices. As illustrated in FIG. 2, the method for music generation may include the following blocks.

At block S201, first tag information of a first object is determined by recognizing the first obj ect.

In embodiments of the present disclosure, blocks S201 to S207 may be implemented by an application on the client or a web page on the client. Description is made below by taking the application on the client as an example.

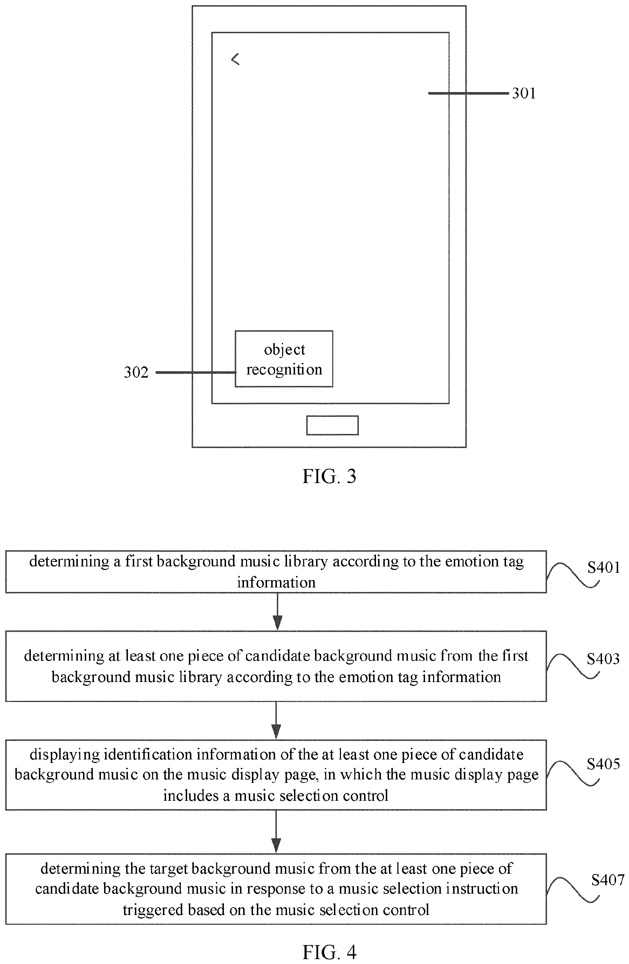

For example, the client may switch to a music display page according to switching indication data in response to opening the application based on an application launching instruction form a user. The music display page may include a plurality of controls. FIG. 3 is a schematic diagram 1 illustrating a music display page according to an embodiment of the present disclosure. As illustrated in FIG. 3, the schematic diagram 1 includes a music display page 301 and an object recognition control 302 on the music display page 301. The client may determine the first tag information of the first object by recognizing the first object in response to an object recognition instruction triggered by the object recognition control. For example, the first tag information may be tag information for object.

For example, the client may include a built-in object recognition model. The first object may be a physical object, that is, a physical object collected by a camera on the client. In response to detecting a touch to the object recognition control, the client may recognize the first object based on the object recognition model in the client and determine the first tag information of the first object.

For example, the first object may be a picture. The client may navigate to a picture library in the client in response to detecting the touch to the object recognition control. In response to detecting a picture selection instruction triggered by a picture selection control, the client may determine a target picture from the picture library based on the picture selection instruction, and then, determine the first tag information of the first object by recognizing the first object (picture) based on the object recognition model in the client.

The pictures in the picture library may be pictures downloaded from an online picture library, pictures from video recorded by cameras of other clients, or pictures obtained from other ways.

In an implementation, in block S201, the client may obtain object description information of the first object, such as a cup, a green plant, a boy, a girl, a table or a sandy beach, after recognizing the first object. The client may further obtain more detailed object description information, such as a lovely cup, a green plant in a house, a laughing boy, a sad girl, a wooden table and a sandy beach in sun. Then, the client may determine the first tag information based on the foregoing object description information.

At block S203, target background music is determined based on the first tag information. The target background music includes lyrics template information. The lyrics template information includes information about a number of words per sentence in lyrics suitable for the target background music.

In an implementation, the first tag information may include a variety of tag information, such as attribute tag information, emotion tag information or scene tag information. The first tag information listed above is just exemplary, and other possible first tag information may be included in embodiments of the present disclosure.

For example, description is made based on the foregoing object description information (such as the cup, the green plant, the boy, the girl, the table, the beach; or, the lovely cup, the green plant in the house, the laughing boy, the sad girl, the wooden table and the sandy beach in the sun).

For example, the client may obtain first tag information of each first object from the object description information, such as, the first tag information of "boy" may be "boy" and the first tag information of "green plant" may be "plant". For example, the client may obtain a plurality of pieces of first tag information of each first object from the object description information, such as, the first tag information of "laughing boy" may be "happy" and "boy", and the first tag information of "green plant in the house" may be "indoor" and "green plant".

For example, the client may also classify the first tag information of the first object. For example, for the first tag information of the "laughing boy", the "happy" may be classified as the emotion tag information, the "boy" may be classified as the attribute tag information, or for the first tag information of the "green plant in the house", the "in the house" may be classified as the scene tag information, and the "green plant" may be classified as the attribute tag information.

The client may determine the target background music based on all first tag information of the first object. Alternatively, the client may determine one piece of first tag information from all the first tag information, and then determine the target background music according to the first tag information. Optionally, the client may randomly determine one piece of first tag information from all the first tag information, or determine one piece of first tag information from all the first tag information based on selection indication information from a user.

FIG. 4 is a flowchart illustrating a method for determining target background music according to an embodiment of the present disclosure. As illustrated in FIG. 4, the first tag information includes the emotion tag information, and the method may include the following blocks.

At block S401, a first background music library is determined according to the emotion tag information.

For example, the client may include a plurality of background music libraries, and each background music library may carry tag information. The tag information of the background music in each background music library is the same as the tag information of the background music library to which the background music belongs. Thus, in a case that the first tag information is the emotion tag information, the client may determine the first background music library whose tag information is the emotion tag information from the plurality of background music libraries. The tag information of each piece of music in the first background music library includes the emotion tag information.

At block S403, at least one piece of candidate background music is determined from the first background music library according to the emotion tag information.

In response to the client determining the first background music library whose tag information is the emotion tag information, the client may further determine the at least one piece of candidate background music from the first background music library according to details included in the emotion tag information of the first object, such as "happy", that is, the client may determine the at least one piece of candidate background music according to the "happy". The details of the emotion tag information of each piece of candidate background music in the at least one piece of candidate background music may be "happy", or details close to the "happy", such as "sunshine", "positive", or "pleasure" and the like.

At block S405, identification information of the at least one piece of candidate background music is displayed on the music display page. The music display page may include a music selection control.

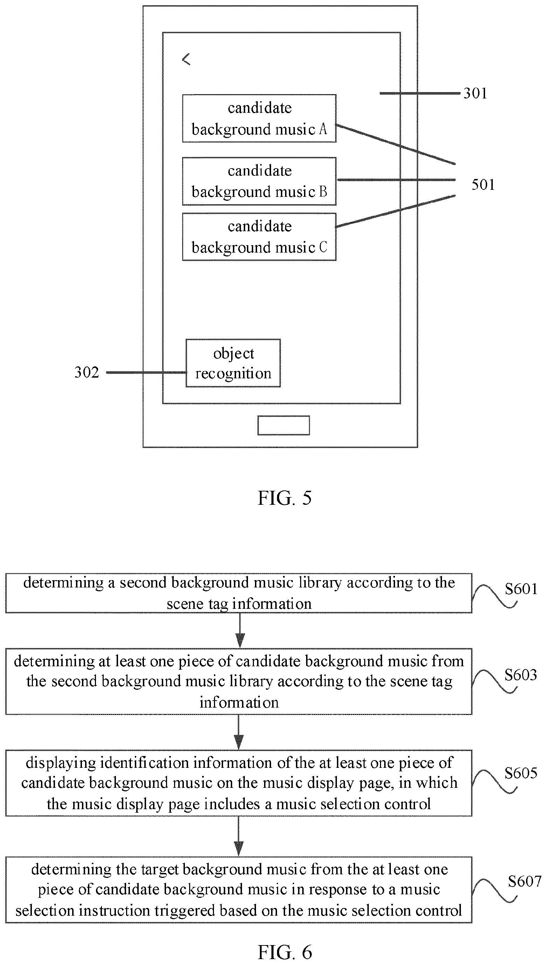

FIG. 5 is a schematic diagram 2 illustrating a music display page according to an embodiment of the present disclosure. As illustrated in FIG. 5, in addition to the music display page 301 and the object recognition control 302 on the music display page 301, the schematic diagram 2 also includes the identification information of the at least one candidate background music on the music display page 301, such as candidate background music A, candidate background music B and candidate background music C in display boxes illustrated in FIG. 5. For example, the foregoing display boxes for displaying the candidate background music A, the candidate background music B and the candidate background music C may be the music selection controls, that is, the display box where the identification information of each piece of candidate background music is located may be the music selection control corresponding to the candidate background music.

At block S407, the target background music is determined from the at least one piece of candidate background music in response to the music selection instruction triggered based on the music selection control.

Alternatively, the client may determine the target background music from the at least one piece of candidate background music in response to the music selection instruction triggered based on the music selection control. In other words, in response to the client detecting a touch to the music selection control corresponding to a certain candidate background music, the client may determine that the candidate background music as the target background music.

FIG. 6 is a flowchart illustrating a method for determining target background music according to an embodiment of the present disclosure. As illustrated in FIG. 6, the first tag information includes the scene tag information, and the method may include the following blocks.

At block S601, a second background music library is determined according to the scene tag information.

For example, the client may include a plurality of background music libraries, and each background music library may carry tag information. The tag information of the background music in each background music library is the same as the tag information of the background music library to which the background music belongs. Thus, in a case that the first tag information is the scene tag information, the client may determine the second background music library whose tag information is the scene tag information from the plurality of background music libraries. The tag information of each piece of music in the second background music library includes the scene tag information.

At block S603, at least one piece of candidate background music is determined from the second background music library according to the scene tag information.

In response to the client determining the second background music library whose tag information is the scene tag information, the client may further determine the at least one piece of candidate background music from the second background music library according to details included in the scene tag information of the first object, such as "indoor", that is, the client may determine the at least one piece of candidate background music according to the "indoor". The details of the scene tag information of each piece of candidate background music in the at least one piece of candidate background music may be "indoor", or details close to the "indoor", such as "in the house", etc.

At block S605, identification information of the at least one piece of candidate background music is displayed on the music display page. The music display page includes music selection controls.

For example, referring to FIG. 5, the display box where the identification information of each piece of candidate background music is located may be the music selection control corresponding to the candidate background music.

At block S607, the target background music is determined from the at least one piece of candidate background music in response to the music selection instruction triggered based on the music selection control.

Alternatively, the client may determine the target background music from at least one piece of candidate background music in response to the music selection instruction triggered based on the music selection control. In other words, in response to the client detecting a touch to the music selection control corresponding to a certain candidate background music, the client may determine that the candidate background music as the target background music.

In an implementation, the client may recognize the first object and determine that the first tag information of the first object is a preset tag, which is configured to represent that the client fails to recognize the first object. The client may determine the target background music from a third background music library. In detail, in response to failure to recognize the first object by the client, or failure to obtain the object description information after recognizing the first object, the client may randomly determine the target background music from the third background music library in response to failure to obtain the first tag information of the first object. Therefore, interrupting the block for the music generation due to failure to obtain the background music may be avoided, and affecting the user experience may be avoided.

As mentioned above, the target background music includes the lyrics template information. The lyrics template information refers to a typesetting template suitable for the background music obtained according to music beats after the background music has been marked with the music beats based on a rhythm of the music. For example, the template suitable for the background music A is that the number of words per sentence is 2-4-5-6-6-5-5-3.... The following describes two implementations for obtaining the lyrics template information.

In an implementation, the client may obtain the lyrics template information of the target background music by analyzing the target background music, such as the lyrics template of the target background music. In detail, the client may analyze the target background music in real time in response to directly calling a client analysis model, and obtain the lyrics template information of the target background music.

In another implementation, the client may obtain the lyrics template information of the target background music from an information storage area according to the identification information of the target background music.

For example, the lyrics template information of the target background music may be stored in the information storage area of a server, and the lyrics template information of the target background music may be obtained via analyzing the target background music by the server. Optionally, the client may send a template acquisition request to the server. The template acquisition request includes the identification information of the target background music. Correspondingly, after receiving the template acquisition request, the server may obtain the identification information of the target background music, and obtain the lyrics template information of the target background music from the information storage area of the server based on the identification information, and send the lyrics template information to the client. In this way, the client may receive the lyrics template information of the target background music sent by the server.

In the above two implementations, the implementation for obtaining the lyrics template information of the target background music in real time may save a lot of storage area comparing with the implementation for obtaining the lyrics template information from the storage area. The implementation for obtaining the lyrics template information from the storage area may reduce a processing time of the whole solution and improve a processing procedure comparing with the implementation for obtaining the lyrics template information of the target background music in real time.

At block S205, second tag information is determined by extracting a tag of a second obj ect.

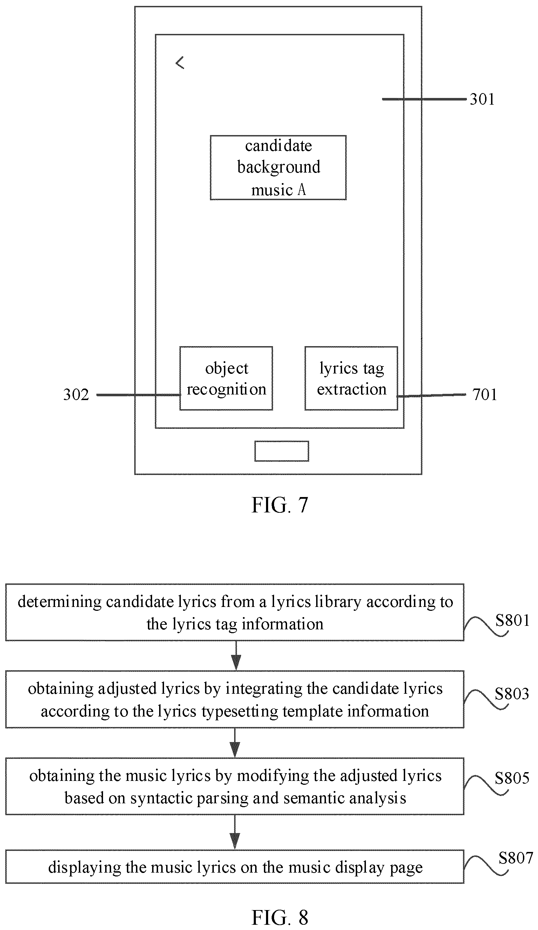

FIG. 7 is a schematic diagram 3 illustrating a music display page according to an embodiment of the present disclosure. As illustrated in FIG. 7, assuming that the candidate background music A is selected as the target background music and the lyrics template information of the target background music is obtained, the music display page 301 may display the identification information of the target background music. In addition, the music display page 301 may also include a lyrics tag extraction control 701. The lyrics tag extraction control is configured to respond to an extraction instruction triggered based on the lyrics tag extraction control. The client may extract the tag of the second object and determine the second tag information. For example, the second tag information may be tag information for lyrics.

For example, in response to the client detecting a touch to the lyrics tag extraction control, the lyrics display page may display a text input box and text entered by the user may be the second object. In response to the client detecting the touch to the lyrics tag extraction control again, it indicates that the user has completed the input, and the client may extract the tag of the second object (text), and determine the second tag information.

For example, in response to the client detecting the touch to the lyrics tag extraction control, the lyrics display page display a microphone virtual component, and voice input by the user may be regard as the second object. In response to the client detecting the touch to the lyrics tag extraction control again, it is indicated that the user has completed the voice input, and the client may extract the tag of the second object (voice) and determine the second tag information.

At block S207, first lyrics are displayed on the music display page according to the second tag information and the lyrics template information, and the target background music is played. A form of the target background music includes rap.

For example, the form of the target background music may include rap, pop, rock, classical and the like.

FIG. 8 is a flowchart illustrating a method for determining first lyrics according to an embodiment of the present disclosure. As illustrated in FIG. 8, the method may include the following blocks.

At block S801, candidate lyrics are determined from a lyrics library according to the second tag information.

For example, in a case that the second tag information is "taking photos", the client may determine a plurality of candidate lyrics sentences from the lyrics library, and each candidate lyrics sentence is related to the second tag information.

At block S803, second lyrics are obtained by integrating the candidate lyrics according to the lyrics template information.

For example, the client may obtain the second lyrics by integrating the candidate lyrics according to the lyrics template information (such as 2-4-5-6-6-5-5-3...). The second lyrics are arranged according to 2-4-5-6-6-5-5-3.

At block S805, the first lyrics are obtained by modifying the second lyrics based on syntactic parsing and semantic analysis.

At block S807, the first lyrics are displayed on the music display page.

Since the lyrics of the second lyrics may satisfy being related to the second tag information, and satisfy being arranged according to the lyrics template information, but actual syntax and semantics of which may not satisfy requirements, the client may obtain the first lyrics by modifying the second lyrics based on syntactic parsing and semantic analysis.

The syntactic parsing may refer to parse a sentence structure of text to be parsed, such as a subject-predicate relation, a verb-object relation, coordinative relation and the like. However, the syntax is a basis and necessary condition for a sentence. The sentence that conforms to the syntax is a correct sentence. But the syntax of the sentence being correct may not mean that the sentence may let others understand what you are saying. The sentence also requires clearly express the semantics, namely, meaning of the discourse. In this way, modifying the second lyrics on the basis of syntax and semantics through the client may cause the sentence structure of the final first lyrics to be reasonable, and let others understand what you are saying, that is, conform to speaking logic.

For example, the music display page also includes a camera control. The client may obtain capturing contents, such as, an image or a video, in response to a capturing instruction triggered based on the camera control. In a case that the first lyrics, the target background music and the image or the video are combined together, the client may display the first lyrics on the music display page and play the target background music and the image or the video. For example the client may play the image or the video while displaying the first lyrics on the music display page and playing the target background music.

In this way, the client may not only complete creation of the music (including target background music and the first lyrics) according to intent of the users, but also add video, realizing MV shooting of corresponding music. The client may also provide variety of selections for the users with and more ways of communication between the users.

In conclusion, embodiments of the present disclosure may automatically match the music related to objects in the current picture without manual selection. With extracting the tag of the second object, the appropriate lyrics may be determined on the basis of automatic matching and considering the requirements of the users, which may improve efficiency of lyrics generation. In this way, a matching degree between the picture of user works and the music may be improved as a whole, and an attention rate of the works may be improved.

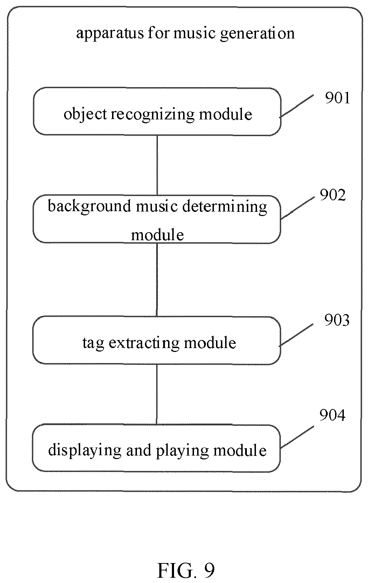

FIG. 9 is a block diagram illustrating an apparatus for music generation according to an embodiment of the present disclosure. Referring to FIG. 9, the apparatus includes a first recognizing module 901, a first determining module 902, a tag extracting module 903 and a displaying module 904.

The first recognizing module 901 is configured to determine first tag information of a first object by recognizing the first object.

The first determining module 902 is configured to determine target background music based on the first tag information. The target background music includes lyrics template information.

The tag extracting module 903 is configured to determine second tag information by extracting a tag of a second object.

The displaying module 904 is configured to display first lyrics on a music display page according to the second tag information and the lyrics template information, and play the target background music. A form of the target background music includes rap.

Optionally, first tag information includes emotion tag information, the first determining module 902 includes:
a first determining sub-module, configured to determine a first background music library according to the emotion tag information;
a second determining sub-module, configured to determine at least one piece of candidate background music from the first background music library according to the emotion tag information;
a first displaying sub-module, configured to display identification information of the at least one piece of candidate background music on the music display page, in which the music display page includes a music selection control; and
a third determining sub-module, configured to determine the target background music from the at least one piece of candidate background music in response to a music selection instruction triggered based on the music selection control.

Optionally, in a case that the first tag information includes scene tag information, the first determining module 902 includes:
a first determining sub-module, configured to determine a second background music library according to the scene tag information;
a second determining sub-module, configured to determine at least one piece of candidate background music from the second background music library according to the scene tag information; m
a first displaying sub-module, configured to display identification information of the at least one piece of candidate background music on the music display page, in which the music display page includes a music selection control; and
a third determining sub-module, configured to determine the target background music from the at least one piece of candidate background music in response to a music selection instruction triggered based on the music selection control.

Optionally, the apparatus further includes:
a template analyzing module, configured to obtain the lyrics template information of the target background music by analyzing the target background music;
or
a lyrics template information obtaining module, configured to obtain the lyrics template information of the target background music from an information storage area according to identification information of the target background music.

Optionally, the apparatus further includes:
a sending module, configured to send a template acquisition request to a server, in which the template acquisition request includes the identification information of the target background music; and
a receiving module, configured to receive the lyrics template information of the target background music sent by the server, in which the lyrics template information of the target background music is obtained by analyzing the typesetting template of the target background music by the server, or the lyrics template information of the target background music is stored in the information storage area of the server.

Optionally, the displaying module includes:
a lyrics determining module, configured to determine candidate lyrics from a lyrics library according to the second tag information;
a lyrics adjusting module, configured to obtain adjusted lyrics by integrating the candidate lyrics according to the lyrics template information;
a lyrics modifying module, configured to obtain the first lyrics by modifying the second lyrics based on syntactic parsing and semantic analysis; and
a lyrics displaying module, configured to display the first lyrics on the music display page.

In some possible embodiments, the tag extracting module 903 is configured to:
in response to determining that the first tag information of the first object is a preset tag by recognizing the first object, determining the target background music from a third background music library, in which the preset tag is configured to represent failure to recognize the first object.

Optionally, the music display page includes a camera control, and the apparatus further includes:
a capturing module, configured to obtain capturing contents, such as an image or a video, in response to a capturing instruction triggered based on the camera control;
in which the displaying module 904 is configured to play the image or the video while displaying the first lyrics on the music display page and playing the target background music. That is, the displaying module 904 is configured to display first lyrics on a music display page according to the second tag information and the lyrics template information, and play the target background music and the capturing contents.

With regard to the apparatus in the above embodiments, the specific way in which each module performs the operation has been described in detail in embodiments of the method and will not be elaborated here.

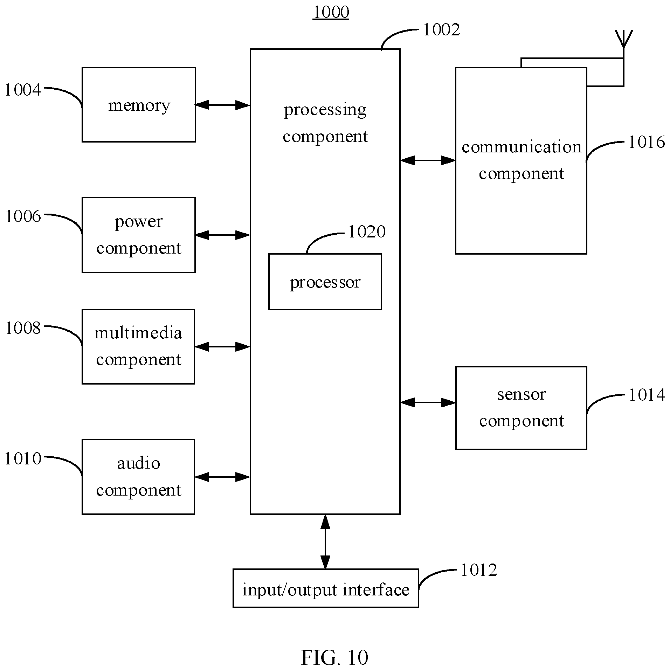

FIG. 10 is a block diagram illustrating an apparatus 1000 for music generation according to an embodiment of the present disclosure. For example, the apparatus 1000 may be a mobile phone, a computer, a digital broadcasting terminal, a messaging device, a game console, a tablet device, a medical equipment, a fitness equipment, a personal digital assistant, etc.

As illustrated in FIG. 10, the apparatus 1000 may include one or more of the following components: a processing component 1002, a memory 1004, a power component 1006, a multimedia component 1008, an audio component 1010, an input/output (I/O) interface 1012, a sensor component 1014 and a communication component 1016.

The processing component 1002 typically controls overall operations of the apparatus 1000, such as the operations associated with display, telephone calls, data communications, camera operations, and recording operations. The processing component 1002 may include one or more processors 1020 to execute instructions. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the apparatus 1000. Examples of such data include instructions for any applications or methods operated on the apparatus 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the apparatus 1000. The power component 1006 may include a power management system, one or more power sources, and any other components associated with the generation, management, and distribution of power in the apparatus 1000.

The multimedia component 1008 includes a screen providing an output interface between the apparatus 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. When the apparatus 1000 is in operation mode, such as shooting mode or video mode, the front camera or the rear camera may receive the external multimedia data. Each front camera and rear camera may be a fixed optical lens system or an optical lens system with focal length and optical zoom capacity.

The audio component 1010 is configured to output and/or input audio signals. For example, the audio component 1010 includes a microphone ("MIC") configured to receive an external audio signal when the electronic device 1000 is in an operation mode, such as a call mode, a recording mode, and a voice recognition mode. The received audio signal may be further stored in the memory 1004 or transmitted via the communication component 1016. In some embodiments, the audio component 1010 also includes a speaker for outputting an audio signal.

The I/O interface 1012 provides an interface between the processing component 1002 and peripheral interface modules, such as a keyboard, a click wheel, buttons, and the like.

The sensor component 1014 includes one or more sensors to provide status assessments of various aspects of the e apparatus 1000. For instance, the sensor component 1014 may detect an open/closed status of the apparatus 1000, relative positioning of components, e.g., the display and the keypad, of the apparatus 1000, a change in position of the apparatus 1000 or a component of the apparatus 1000, a presence or absence of a target object contact with the apparatus 1000, an orientation or an acceleration/deceleration of the apparatus 1000, and a change in temperature of the apparatus 1000. The sensor component 1014 may include a proximity sensor, which is configured to detect the existence of the objects nearby without any physical contact. The sensor component 1014 may further include a light sensor such as a CMOS or CCD image sensor, which is configured to use in imaging applications. In some embodiments, the sensor component 1014 may further include an acceleration transducer, a gyroscope sensor, a magnetic sensor, a pressure sensor or a temperature sensor.

The communication component 1016 is configured to facilitate communication, wired or wirelessly, between the apparatus 1000 and other devices. The apparatus 1000 may access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the apparatus 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, which is configured to perform the above method.

In an exemplary embodiment, a storage medium is further provided which includes instructions, such as the memory 1004 including instructions, in which the instructions may be executed by the processor 1020 of the apparatus 1000 to complete the above methods. The storage medium may be a non-temporary computer readable storage medium. For example, the non-temporary computer readable storage medium may be a ROM, a random access memory (RAM), a CD-ROM, a magnetic tape, a floppy disk, an optical data storage device, etc.

## Claims

1. A method for music generation, comprising:
determining (S201) first tag information of a first object by recognizing the first object;
determining (S203) target background music based on the first tag information, wherein the target background music comprises lyrics template information which comprises information about a number of words per sentence in lyrics suitable for the target background music;
determining (S205) second tag information by extracting a tag of a second object; and
displaying (S207) first lyrics on a music display page according to the second tag information and the lyrics template information, and playing the target background music.

2. The method according to claim 1, wherein the first tag information comprises emotion tag information, said determining (S203) the target background music based on the first tag information comprises:
determining (S401) a first background music library according to the emotion tag information;
determining (S403) at least one piece of candidate background music from the first background music library according to the emotion tag information;
displaying (S405) identification information of the at least one piece of candidate background music on the music display page, wherein the music display page comprises a music selection control; and
determining (S407) the target background music from the at least one piece of candidate background music in response to a music selection instruction triggered based on the music selection control.

3. The method according to claim 1 or 2, wherein the first tag information comprises scene tag information, said determining (S203) the target background music based on the first tag information comprises:
determining (S601) a second background music library according to the scene tag information;
determining (S603) at least one piece of candidate background music from the second background music library according to the scene tag information;
displaying (S605) identification information of the at least one piece of candidate background music on the music display page, wherein the music display page comprises a music selection control; and
determining (S607) the target background music from the at least one piece of candidate background music in response to a music selection instruction triggered based on the music selection control.

4. The method according to any one of claims 1 to 3, further comprising:
obtaining the lyrics template information of the target background music by analyzing the target background music; or
obtaining the lyrics template information of the target background music from an information storage area according to identification information of the target background music.

5. The method according to claim 4, further comprising:
sending a template acquisition request to a server, wherein the template acquisition request comprises the identification information of the target background music; and
receiving the lyrics template information of the target background music sent by the server, wherein the lyrics template information of the target background music is obtained by analyzing the target background music by the server, or the lyrics template information of the target background music is stored in the information storage area of the server.

6. The method according to any one of claims 1 to 5, wherein said displaying (S207) first lyrics on a music display page according to the second tag information and the lyrics template information comprises:
determining (S801) candidate lyrics from a lyrics library according to the second tag information;
obtaining (S803) second lyrics by integrating the candidate lyrics according to the lyrics template information;
obtaining (S805) the first lyrics by modifying the second lyrics based on syntactic parsing and semantic analysis; and
displaying (S807) the first lyrics on the music display page.

7. The method according to any one of claims 1 to 6, further comprising:
in response to determining that the first tag information of the first object is a preset tag by recognizing the first object, determining the target background music from a third background music library, wherein the preset tag is configured to represent failure to recognize the first object.

8. The method according to any one of claims 1 to 7, wherein, the music display page comprises a camera control, and the method further comprises:
obtaining an image or a video in response to a capturing instruction triggered based on the camera control; and
playing the image or the video while displaying the first lyrics on the music display page and playing the target background music.

9. The method according to any one of claims 1 to 8, wherein a form of the target background music comprises rap.

10. An apparatus for music generation, comprising:
a first recognizing module (901), configured to determine first tag information of a first object by recognizing the first object;
a first determining module (902), configured to determine target background music based on the first tag information, wherein the target background music comprises lyrics template information which comprises information about a number of words per sentence in lyrics suitable for the target background music;
a tag extracting module (903), configured to determine second tag information by extracting a tag of a second object; and
a displaying module (904), configured to display first lyrics on a music display page according to the second tag information and the lyrics template information, and play the target background music.

11. The apparatus according to claim 9, wherein in a case that the first tag information comprises emotion tag information, the first determining module (902) comprises:
a first determining sub-module, configured to determine a first background music library according to the emotion tag information;
a second determining sub-module, configured to determine at least one piece of candidate background music from the first background music library according to the emotion tag information; m
a first displaying sub-module, configured to display identification information of the at least one piece of candidate background music on the music display page, wherein the music display page comprises a music selection control; and
a third determining sub-module, configured to determine the target background music from the at least one piece of candidate background music in response to a music selection instruction triggered based on the music selection control.

12. The apparatus according to claim 10 or 11, wherein the first tag information comprises scene tag information, the first determining module (902) comprises:
a first determining sub-module, configured to determine a second background music library according to the scene tag information;
a second determining sub-module, configured to determine at least one piece of candidate background music from the second background music library according to the scene tag information;
a first displaying sub-module, configured to display identification information of the at least one piece of candidate background music on the music display page, wherein the music display page comprises a music selection control; and
a third determining sub-module, configured to determine the target background music from the at least one piece of candidate background music in response to a music selection instruction triggered based on the music selection control.

13. An electronic device (1000), comprising:
a processor (1020);
a memory (1004), configured to store instructions executable by the processor (1020),
wherein the processor (1020) is configured to implement the method for music generation according to any one of claims 1 to 9 in response to executing the instructions.

14. A computer readable storage medium, configured to store instructions, when executable by a processor of an electronic device, causing the electronic device to implement the method for music generation according to any one of claims 1 to 9.

15. A computer program product, comprising a computer program, stored in a readable storage medium, when read and executed from the storage medium by at least one processor of a computer device, causing the computer device to implement the method for music generation according to any one of claims 1 to 9.
